# EUROPÄISCHE PATENTSCHRIFT

(11) **EP 3 376 429 B1**
(45) Veröffentlichungstag und Bekanntmachung des Hinweises auf die Patenterteilung: **13.11.2024**
(21) Anmeldenummer: 18152623.7
(22) Anmeldetag: 19.01.2018
(51) Int. Cl.: G06K 7/10

(54) **RFID-LESEGERÄT UND VERFAHREN ZU SEINER HERSTELLUNG**
RFID-READER AND METHOD FOR ITS PRODUCTION
APPAREIL DE LECTURE RFID ET SON PROCÉDÉ DE FABRICATION

(30) Priorität: 16.03.2017 DE 102017105649
(43) Veröffentlichungstag der Anmeldung: 19.09.2018
(73) Patentinhaber: Bundesdruckerei GmbH, 10969 Berlin (DE)
(72) Erfinder: Fischer, Jörg, 10317 Berlin (DE); Fritze, Frank, 12437 Berlin (DE); Waldmüller, Jens, 12621 Berlin (DE); Troelenberg, Stefan, 15749 Mittenwalde, OT Ragow (DE)
(74) Vertreter: Bittner, Thomas L.

(56) Entgegenhaltungen:
- EP-A2- 1 398 725
- DE-A1- 102005 017 841
- DE-A1- 3 043 026

## Beschreibung

### Gegenstand der Erfindung

Die vorliegende Erfindung betrifft ein RFID-Lesegerät (RFID - radiofrequency identification), auch als RFID-Reader bezeichnet, insbesondere für Multifunktionskarten, zum Beispiel für Karten mit integrierter Sensorik, für Kamerakarten oder allgemein für ID-Dokumente mit biometrischer Authentifizierung. Die Erfindung betrifft außerdem ein Verfahren zur Herstellung eines RFID-Lesegeräts.

### Hintergrund der Erfindung

Eine beispielhafte RFID-Anordnung umfasst einen Transponder, der mindestens einen kennzeichnenden bzw. identifizierenden Code bzw. weitere Daten übermittelt, und ein Lesegerät zum Auslesen dieser Kennung oder zum Lesen und Schreiben von Daten. Die Kommunikation bzw. Kopplung zwischen Transponder und Lesegerät erfolgt durch ein vom Lesegerät erzeugtes hochfrequentes elektromagnetisches Wechselfeld. Dabei werden Daten übertragen und gegebenenfalls der Transponder mit Energie versorgt. Die Übertragung der Information erfolgt zum Beispiel nach der Norm ISO 14443 bei einer Frequenz von 13,56 MHz.

Aktive ID-Karten, die komplexe Systeme mit einem Mikroprozessor, einem Karten-Betriebssystem und kryptografischen Fähigkeiten enthalten, finden eine stetig zunehmende Verbreitung. So sind beispielsweise Ausweisdokumente in Form einer ID-Karte, wie insbesondere als Personalausweis, Führerschein, Reisepass oder Firmenausweis bekannt. Aber auch Mobiltelefone, tragbare Vorrichtungen (Wearables), ID-Token, Bankkarten, Eintrittskarten oder sonstige RFID-Dokumente können mit einem RFID-Lesegerät auslesbar sein..

RFID-Lesegeräte für kontaktlose ID-Karten sind grundsätzlich bekannt und weit verbreitet. Sie werden vor allem für Zutritt, Zugang, digitale Anwendungen und Bezahlfunktionen verwendet. Beispiele für RFID-Lesegeräte sind unter anderem in DE 10 2009 027 123 A1 und DE 10 2009 045 186 A1 offenbart.

Aus der DE 10 2005 017 841 A1 ist eine Zugangskontrollvorrichtung mit einer Antenne bekannt, die höher als breit ist. Die DE 30 43 026 A1 zeigt Beispiele für nicht quadratische Antennen.

EP 1 398 725 A2 offenbart ein handgehaltenes Lesergerät zum Lesen einer IC-Etikette der Artikel in einem Regal.

Es ist ein Trend zu ID-Karten mit erweiterten Funktionen und zusätzlichen Komponenten, wie z. B. Displays, Sensoren, Kameras, Mikrofonen, Lautsprechern oder Tastaturen zu verzeichnen (siehe auch ISO 18328-2 / ISO 17839-2). So sind ID-Karten mit integrierten Fingerabdrucksensoren und Kameras zur Gesichtserfassung bekannt, die eine benutzerfreundliche Erfassung biometrischer Daten sowie ggf. eine biometrische Authentisierung auf der Karte selbst erlauben. Solche Karten werden an ein RFID-Lesegerät gehalten, woraufhin der Fingerabdruck durch den Fingerabdrucksensor der ID-Karte oder das Gesicht des Benutzers durch die Kamera erfasst und daraus extrahierte biometrische Daten zur Überprüfung einer Zugangsberechtigung des Inhabers der ID-Karte oder ein durch die ID-Karte selbst erstelltes Prüfergebnis der biometrischen Daten an das RFID-Lesegerät übermittelt werden.

### Beschreibung der Erfindung

Vor dem beschriebenen Hintergrund ist es Aufgabe der vorliegenden Erfindung, ein verbessertes RFID-Lesegerät und ein Verfahren zu seiner Herstellung zur Verfügung zu stellen.

Die Aufgabe wird durch ein RFID-Lesegerät nach Anspruch 1 und ein Verfahren nach Anspruch 7 gelöst. Die abhängigen Ansprüche enthalten weitere, vorteilhafte Ausgestaltungen der Erfindung.

Das erfindungsgemäße RFID-Lesegerät umfasst ein Gehäuse und mindestens eine in dem Gehäuse angeordnete Antenne.

Die Leiterschleife weist zudem eine Höhe h in einer senkrecht zur Mittelachse verlaufenden Längsrichtung und eine Breite b in einer senkrecht zur Längsrichtung und senkrecht zur Mittelachse verlaufenden Querrichtung auf. Mit anderen Worten stehen die Mittelachse, die Längsrichtung und die Querrichtung jeweils senkrecht aufeinander. Die Höhe h ist größer als die Breite b. Die Höhe h der Leiterschleife ist mindestens doppelt so groß wie die Breite b. Die Breite b der Leiterschleife und damit der Antenne beträgt zwischen 40 Millimeter und 100 Millimeter (40 Millimeter ≤ b ≤ 100 Millimeter), vorzugsweise 60 Millimeter, und die Höhe h der Leiterschleife und damit der Antenne zwischen 200 Millimeter und 1000 Millimeter (200 Millimeter ≤ h ≤ 1000 Millimeter), vorzugsweise 500 Millimeter. Diese Dimensionierung deckt typische Unterschiede in der Höhe des Gesichtsfeldes ab, wenn die Antenne in einer entsprechenden Höhe (zum Beispiel 1000 Millimeter über dem Boden) angebracht ist oder die mindestens eine Leiterschleife in einer solchen Höhe angeordnet ist. In einer weiteren Variante ist die Höhe h der Leiterschleife mindestens dreimal, zum Beispiel viermal oder fünfmal, so groß wie die Breite b._Es ist durch mindestens eine im inneren der Leiterschleife angeordnete Durchgangsöffnung eine offene Formgestaltung ausgebildet, wobei die Leiterschleife um die Durchgangsöffnung herum verläuft. Das Lesegerät umfasst einen Ständerfuß und / oder Mittel zur Befestigung des Lesegeräts an einer Wand oder einem Bauteil.

Bei der Mittelachse handelt es sich um eine Bezugsachse, also nicht um ein physisches Bauelement. Vorzugsweise verlaufen die Längsrichtung in vertikaler Richtung und die Querrichtung in horizontaler Richtung. Die Leiterschleife und damit die Antenne des RFID-Lesegeräts sind in diesem, bevorzugten Fall also in vertikaler Richtung höher als sie in horizontaler Richtung breit ist.

Die Erfindung beruht auf der Erkenntnis und schließt diese mit ein, dass reproduzierbare Ergebnisse und eine besonders zuverlässige Gesichtserkennung unter Verwendung einer ID-Karte mit Kamerafunktion erreicht werden, wenn die Kamera auf wenigstens ungefähr der gleichen Höhe wie das Gesicht der durch die ID-Karte auszuweisenden Person gehalten wird. Herkömmliche RFID-Lesegeräte sind jedoch quadratisch ausgebildet und geben so den Ort, an dem die ID-Karte während der Gesichtserkennung gehalten werden muss, in engen Grenzen vor. Dadurch wird ein Benutzer genötigt, sein Gesicht auf die Höhe des Lesegerätes zu bringen, was einen eingeschränkten Benutzungskomfort und eine durch die unnatürliche Kopfhaltung bedingte verschlechterte Gesichtserkennungsfunktion bedingt. Die Erfindung hat vor diesem Hintergrund den Vorteil, dass durch die Gestaltung der Antenne und des Gehäuses die Benutzung einer kontaktlosen ID-Karte in verschiedenen Höhen ermöglicht wird. Damit gestattet das erfindungsgemäße RFID-Lesegerät insbesondere die Benutzung im Zusammenhang mit ID-Karten mit Kamerafunktion durch unterschiedlich große Personen oder Rollstuhlfahrer.

Das Gehäuse kann eine Frontplatte, eine Rückplatte und ein in Richtung der Mittelachse zwischen der Frontplatte und der Rückplatte angeordnetes Innenteil umfassen. Das Innenteil kann vorzugsweise ebenfalls als Platte ausgestaltet sein. In dem Innenteil können zum Beispiel die Antenne und/oder mindestens eine elektronische Komponente angeordnet sein. Die mindestens eine elektronische Komponente kann eine Ansteuerungselektronik und/oder mindestens eine Lichtquelle, wie beispielsweise eine Anzahl an LEDs, und/oder Anschlusskabel usw. umfassen. Durch die Anordnung der technischen Komponenten, insbesondere der elektronischen Komponenten, im Innenteil sind diese Komponenten über die Frontplatte und/oder über die Rückplatte leicht zugänglich.

in einer bevorzugten Variante umfasst das Gehäuse ein transparent ausgestaltetes Innenteil. Dabei können die Frontplatte und Rückplatte nicht transparent ausgestaltet sein.

Vorteilhafterweise umfasst das RFID-Lesegerät eine Anzahl LEDs, die in dem Gehäuse so angeordnet sind, dass sie bei ihrem Betrieb Licht durch das transparente Innenteil abstrahlen, vorzugsweise in radialer Richtung bezüglich der Mittelachse abstrahlen, insbesondere nach außen abstrahlen. Auf diese Weise kann ein leuchtender Rand erzielt werden. Dadurch ist das RFID-Lesegerät für Nutzer gut sichtbar, wobei gleichzeitig ein ansprechendes Design erzielt wird. Durch eine Farbe des von den LEDs abgestrahlten Lichts kann eine Benutzerführung erreicht werden. So kann das Lesegerät eine Zutrittsverweigerung durch rotes Licht und eine Zutrittsgewährung durch grünes Licht anzeigen. Eine Betriebsbereitschaft des RFID-Lesegerätes kann beispielsweise durch weißes, gelbes oder blaues Licht angezeigt werden.

Das RFID-Lesegerät umfasst mindestens eine im Inneren der Leiterschleife angeordnete Durchgangsöffnung. Mit anderen Worten verläuft die mindestens eine Leiterschleife der Antenne um die Durchgangsöffnung herum. Dabei kann die Durchgangsöffnung eine Mittelachse umfassen, die parallel zur Mittelachse der Leiterschleife verläuft. Prinzipiell sind verschiedene Formgestaltungen der Durchgangsöffnung möglich. Im Hinblick auf ein ansprechendes Design und einen möglichst geringen Materialeinsatz, also auch zur Reduzierung von Herstellungskosten, ist es vorteilhaft, wenn die Durchgangsöffnung eine an die Form der Leiterschleife und/oder an die Form der Antenne angepasste Form aufweist. Beispielsweise kann die Durchgangsöffnung oval geformt sein. Durch die durch die Durchgangsöffnung erzielte offene Formgestaltung, insbesondere in Kombination mit einem transparenten, Licht abstrahlenden Innenteil, ist das RFID-Lesegerät leicht visuell erkennbar. In dieser Variante kann Licht sowohl radial nach innen als auch radial nach au-βen abgestrahlt werden.

Die Durchgangsöffnung kann in Längsrichtung eine Höhe h_{D} und in Querrichtung eine Breite b_{D} aufweisen, wobei die Höhe h_{D} größer ist als die Breite b_{D}, also h_{D} > b_{D}. Insbesondere kann die Durchgangsöffnung doppelt so lang sein wie sie breit ist. In einer vorteilhaften Variante ist die Durchgangsöffnung 30 Millimeter bis 90 Millimeter breit (30 Millimeter ≤ b_{D} ≤ 90 Millimeter), vorzugsweise 50 Millimeter breit und/oder 190 Millimeter bis 950 Millimeter (190 Millimeter ≤ h_{D} ≤ 950 Millimeter), vorzugsweise 450 Millimeter hoch. Diese Dimensionierung ist an die bevorzugte Dimensionierung der Leiterschleife bzw. der Antenne angepasst.

In einer weiteren Variante umfasst das RFID-Lesegerät mindestens eine gelaserte Plastikplatte. Dabei können das Innenteil und/oder die Frontplatte und/oder die Rückplatte als gelaserte Plastikplatte ausgestaltet sein. Dies ermöglicht eine einfache und kostengünstige Herstellung.

Vorteilhafterweise umfasst das RFID-Lesegerät einen Ständerfuß. Dies ermöglicht einen flexiblen räumlichen Einsatz des RFID-Lesegeräts und erspart das Anbringen an Wänden oder Bauteilen. Zudem ist die Höhe der Antenne festgelegt und kann so für verschiedene Anwendungen oder Einsatzorte normiert werden. Zusätzlich oder alternativ dazu kann das RFID-Lesegerät mindestens ein Mittel zur Befestigung des RFID-Lesegeräts an einer Wand oder einem Bauteil umfassen.

Das RFID-Lesegerät kann prinzipiell zur Verwendung für einen Datenaustausch bzw. eine Kommunikation mit aktiven oder passiven RFID-Transpondern ausgelegt sein. Es kann insbesondere für einen Datenaustausch bzw. eine Kommunikation mit ID-Karten und/oder Kamerakarten mit Gesichtserkennung und/oder tragbare Vorrichtungen ausgelegt sein. Zum Beispiel kann das RFID-Lesegerät zum Betrieb mit einer Trägerfrequenz von 13,56 MHz ausgelegt sein. Weiterhin kann das RFID-Lesegerät für einen Betrieb nach der Norm ISO 14443, ISO 18092, ISO 21481 ISO, 18000-3 ausgelegt sein. Das Lesegerät kann damit auch für Anwendungen der Near Field Communication (NFC) genutzt werden. Dies eröffnet ein weites Anwendungsspektrum. Es können auch Mobiltelefone, Smartwatches oder andere Wearables mit dem RFID-Lesegerät verwendet werden.

Das RFID-Lesegerät umfasst vorzugsweise eine Antenne mit nur einer Leiterschleife, insbesondere für einen Betrieb mit einer Trägerfrequenz von 13,56 MHz. In diesem Fall ist es besonders einfach aufgebaut und daher kostengünstig herstellbar.

Das erfindungsgemäße RFID-Lesegerät hat zusammenfassend die folgenden Vorteile: Es stellt ein kombiniertes RFID-Lesegerät dar, welches für die Verwendung einer ID-Karte in verschiedenen Höhen an einem Zugangspunkt, einer Maschine oder einem Arbeitsplatz geeignet ist. Dabei wird eine komfortable, barrierefreie Verwendung von kontaktlosen ID-Karten für kleine Personen oder große Personen oder Rollstuhlfahrer ermöglicht. Es ist somit anstelle von mehreren, in verschiedenen Höhen angebrachten Lesegeräten nur noch ein Lesegerät erforderlich.

Weiterhin ist das RFID-Lesegerät durch eine offene Formgestaltung leicht visuell erkennbar. Das RFID-Lesegerät ist darüber hinaus einfach an einer Wand, einer Maschine, auf einer Säule oder als Standgerät am Arbeitsplatz installierbar.

Die Verwendung von gelaserten Plastikplatten, zum Beispiel für die Frontplatte, das Innenteil, welches mit Antenne und Elektronik ausgestattet sein kann, und die Rückplatte, ermöglicht einen sehr einfachen Aufbau und damit eine kostengünstige Herstellung.

Das RFID-Lesegerät ist zudem komfortabel und flexibel verwendbar sowohl für Kamerakarten mit Gesichtserkennung als auch für konventionelle ID-Karten.

Das erfindungsgemäße Verfahren zur Herstellung eines zuvor beschriebenen erfindungsgemäßen RFID-Lesegeräts umfasst den Schritt, dass mindestens eine Platte zur Fertigung des Gehäuses mittels eines Lasers zugeschnitten wird. Bevorzugt wird als Platte eine Plastikplatte verwendet. In einer vorteilhaften Variante werden eine Frontplatte, eine Rückplatte und ein Innenteil gefertigt, also insbesondere mittels eines Lasers zugeschnitten. Zur Bildung des Gehäuses kann das Innenteil in Richtung der Mittelachse zwischen der Frontplatte und der Rückplatte angeordnet werden. Die Platten können zum Beispiel lösbar fest miteinander verbunden werden, insbesondere verschraubt werden. Alternativ dazu oder zusätzlich können die Platten nicht lösbar fest miteinander verbunden werden, zum Beispiel aneinander geklebt oder gelötet oder geschweißt werden. In dem Innenteil können die Antenne und/oder mindestens eine elektronische Komponente angeordnet werden, vorteilhafterweise bevor das Innenteil mit der Frontplatte und der Rückplatte verbunden wird. Das erfindungsgemäße Verfahren hat den Vorteil, dass es eine besonders einfache und kostengünstige Herstellung eines erfindungsgemäßen RFID-Lesegeräts ermöglicht.

### Beschreibung von Ausführungsbeispielen

Weitere Merkmale, Eigenschaften und Vorteile der vorliegenden Erfindung werden im Folgenden anhand von Ausführungsvarianten unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsvarianten stellen lediglich Beispiele dar, welche den Gegenstand der Erfindung jedoch nicht beschränken.
- Fig. 1: zeigt schematisch ein erfindungsgemäßes RFID-Lesegerät in einer perspektivischen Ansicht.
- Fig. 2: zeigt schematisch eine Frontplatte, ein Innenteil und eine Rückplatte eines erfindungsgemäßen RFID-Lesegeräts, jeweils in einer Seitenansicht.
- Fig. 3: zeigt schematisch das Innenteil mit darin angeordneten Komponenten in einer Seitenansicht.
- Fig. 4: zeigt schematisch eine Anwendung des erfindungsgemäßen RFID-Lesegeräts.

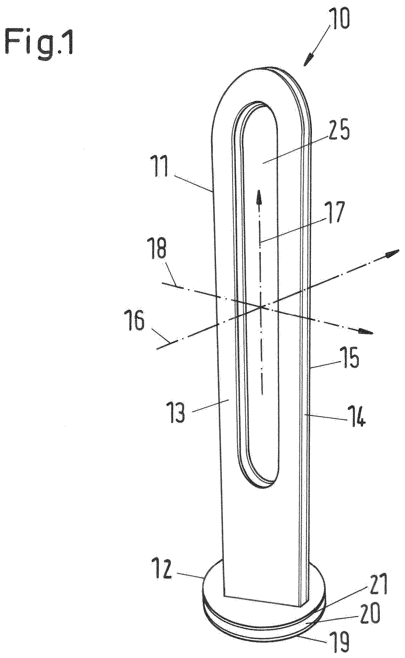

Ein Ausführungsbeispiel der vorliegenden Erfindung unter Berücksichtigung von weiteren Ausführungsvarianten wird im Folgenden anhand der Figuren 1 bis 4 näher erläutert. Einander entsprechende Komponenten werden dabei mit denselben Bezugsziffern gekennzeichnet.

Die Figur 1 zeigt schematisch ein erfindungsgemäßes RFID-Lesegerät 10 in einer perspektivischen Ansicht. Das Lesegerät 10 umfasst ein Gehäuse 11 und einen Ständerfuß 12. Das Gehäuse 11 umfasst eine Mittelachse 16, eine Längsrichtung 17 und eine Querrichtung 18, die jeweils senkrecht aufeinander stehen. Vorzugsweise ist die Längsrichtung 17 vertikal und die Querrichtung 18 horizontal ausgerichtet.

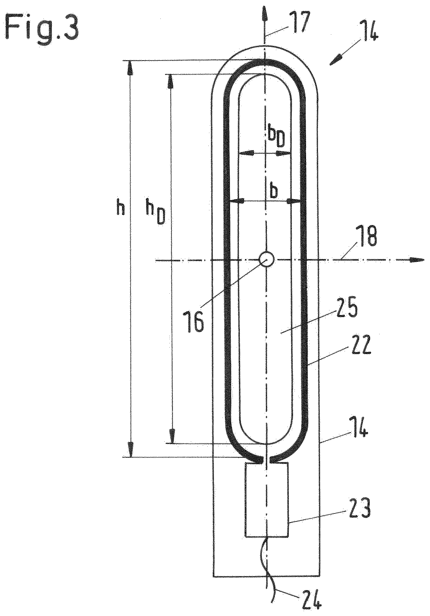

In dem Gehäuse 11 sind eine Antenne und weitere elektronische Bauteile bzw. Komponenten angeordnet (siehe Figur 3). Die Antenne 22 bzw. mindestens eine, die Antenne bildende Leiterschleife weist die Mittelachse 16 auf bzw. definiert die Mittelachse 16. Die Leiterschleife ist in Längsrichtung bzw. vertikaler Richtung 17 höher als sie in Querrichtung bzw. horizontaler Richtung 18 breit ist und ermöglicht dadurch die Benutzung des Lesegeräts 10 für kontaktlose Transponder, insbesondere ID-Karten mit integrierter Kamera zur Gesichtserkennung, in verschiedenen Höhen. Der Ständerfuß 12 ist optional. Alternativ zu dem in Figur 1 gezeigten Ständerfuß 12 kann das Lesegerät 10 Mittel zur Befestigung des Lesegeräts 10 an einer Wand, an einer Maschine, an einer Tür oder an einer anderen Komponente umfassen.

Das Gehäuse 11 umfasst eine Frontplatte 13, eine Rückplatte 15 und ein in Richtung der Mittelachse 16 zwischen der Frontplatte 13 und der Rückplatte 15 angeordnetes Innenteil 14. Das Innenteil 14 ist vorzugsweise transparent ausgestaltet und bildet zumindest einen Teil der seitlichen Oberfläche des Gehäuses 11. Vorteilhafterweise sind in dem Gehäuse 11 eine oder mehrere Lichtquellen angeordnet, zum Beispiel eine Anzahl LEDs, die so ausgestaltet und angeordnet sind, dass sie Licht durch das transparente Innenteil 14 seitlich, also insbesondere in einer Ebene, auf der die Mittelachse 16 senkrecht steht, nach außen abstrahlen können. Dies ermöglicht eine gute visuelle Erkennbarkeit des Lesegeräts bei gleichzeitig ansprechendem Design.

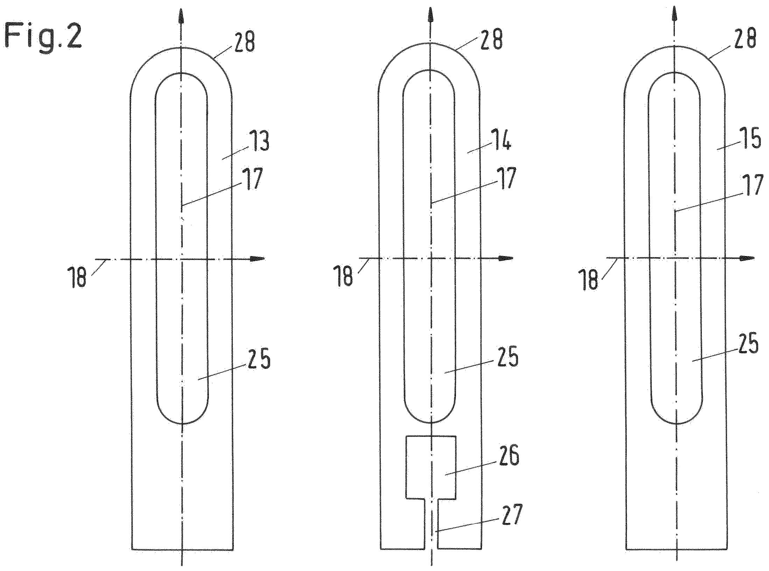

Das in der Figur 1 gezeigte Lesegerät 10 weist zudem eine grundsätzlich optionale Durchgangsöffnung 25 auf. Dabei verläuft mindestens eine Leiterschleife der Antenne um die Durchgangsöffnung 25 herum bzw. die Durchgangsöffnung ist innerhalb der Leiterschleife angeordnet. Ausführungsvarianten mit mehreren Durchgangsöffnungen sind ebenfalls möglich. Die Durchgangsöffnung hat allerdings den Vorteil, dass sie durch die dadurch erzielte offene Formgestaltung die visuelle Erkennbarkeit des Lesegeräts fördert. Gleichzeitig benötigt diese Gestaltung weniger Material als eine geschlossene Variante und spart damit Materialkosten. Die Form der Durchgangsöffnung und ihre Größe sind grundsätzlich variabel wählbar. Neben der gezeigten ovalen Form sind auch eckige Formen oder geschwungene Formen möglich. Die bevorzugte Form und Größe der Durchgangsöffnung wird im Zusammenhang mit den Figuren 2 und 3 genauer erläutert.

Der Ständerfuß 12 ist in der Figur 1 in Form einer kreisförmigen Scheibe gezeigt. Andere Ausgestaltungen des Ständerfußes sind ebenfalls möglich, zum Beispiel eine eckige Form oder das Vorsehen von einer Anzahl an Ständerfüßen. In der in der Figur 1 gezeigten Variante umfasst der Ständerfuß eine Grundplatte 19, ein Innenteil 20 und eine Deckplatte 21. Das Innenteil 20 ist zwischen der Grundplatte 19 und der Deckplatte 21 angeordnet. Es ist vorzugsweise transparent ausgestaltet und so angeordnet, dass es zumindest einen Teil der nach außen sowie ggf. der zu einer Durchgangsöffnung 25 weisenden seitlichen Oberflächen des Ständerfußes 12 bildet. Die Grundplatte 19 und die Deckplatte 21 sind vorzugsweise nicht transparent ausgestaltet. Vorteilhafterweise sind eine oder mehrere Lichtquellen in dem Lesegerät 10 so angeordnet, dass sie Licht durch das transparente Innenteil 20 seitlich abstrahlen können. Dies hat den Vorteil, dass das Lesegerät 10 visuell gut wahrnehmbar ist und durch das Licht eine Benutzerführung verwirklicht werden kann. Weiterhin bekommt das Lesegerät 10 durch die Beleuchtung von Innen ein ansprechendes Erscheinungsbild.

Die Figur 2 zeigt schematisch die Frontplatte13, das Innenteil 14 und die Rückplatte 15 des RFID-Lesegeräts 10, jeweils in einer Seitenansicht. Die Frontplatte 13 und die Rückplatte 15 sind identisch ausgebildet. Das Innenteil 14 weist abweichend von der Frontplatte 13 und der Rückplatte 15 in Längsrichtung 17 unterhalb der Durchgangsöffnung 25 einen Hohlraum oder eine Öffnung 26 und einen Zugangskanal 27 auf. In dem Hohlraum 26 können elektronische Bauteile angeordnet werden. Der Zugangskanal 27 stellt einen Zugang, beispielsweise von unten, zu dem Hohlraum 26 bereit, durch den in dem Hohlraum 26 angeordnete elektronische Bauteile kontaktiert werden können. Das Innenteil ist vorzugsweise transparent. Die Frontplatte 13, die Rückplatte 15 und das Mittelteil 14 sind in Längsrichtung 17 gleich hoch, in Querrichtung 18 gleich breit und weisen eine identisch positionierte und identisch dimensionierte Durchgangsöffnung 25 auf. Zudem weisen sie jeweils einen in Längsrichtung 17 oberen Bereich 28 auf, der halbkreisförmig gestaltet ist. Der obere Bereich 28 kann grundsätzlich auch anders geformt sein.

Die Frontplatte 13, die Rückplatte 15 und das Innenteil 14 können aufgrund ihrer identischen Dimensionierung in Längsrichtung 17 und Querrichtung 18 bzw. in der von diesen Richtungen aufgespannten Ebene in Richtung der Mittelachse 16 aufeinandergelegt und aneinander befestigt werden, zum Beispiel aneinander geschraubt oder geklebt werden. Die Montage und damit die Herstellung des Lesegeräts sind daher einfach und kostengünstig. Die Frontplatte 13, die Rückplatte 15 und das Innenteil 14 können zudem Plastikplatten, vorzugsweise gelaserte Plastikplatten, sein.

Die Figur 3 zeigt schematisch das Innenteil 14 mit darin angeordneten Komponenten in einer Draufsicht. In dem Innenteil 14 ist eine Antenne 22 angeordnet, die aus mindestens einer Leiterschleife gebildet wird. Die Leiterschleife ist um die Mittelachse 16 herum angeordnet. Die Antenne 22 bzw. die Leiterschleife hat in Längsrichtung 17 eine Höhe h und in Querrichtung 18 eine Breite b, wobei die Höhe h größer ist als die Breite b. Die Höhe h der Leiterschleife ist mindestens doppelt so groß wie die Breite b. Erfindungsgemäß ist die Leiterschleife und damit die Antenne 22 40 Millimeter bis 100 Millimeter breit (40 Millimeter ≤ b ≤ 100 Millimeter), vorzugsweise 60 Millimeter breit und 200 Millimeter bis 1000 Millimeter (200 Millimeter ≤ h ≤ 1000 Millimeter), vorzugsweise 500 Millimeter hoch.

Die Durchgangsöffnung 25 kann in Längsrichtung 17 eine Höhe h_{D} und in Querrichtung 18 eine Breite b_{D} aufweisen, wobei die Höhe h_{D} größer ist als die Breite b_{D}, also h_{D} > b_{D}. Insbesondere kann die Durchgangsöffnung 25 doppelt so lang sein wie sie breit ist. In einer vorteilhaften Variante ist die Durchgangsöffnung 25 30 Millimeter bis 90 Millimeter breit (30 Millimeter ≤ b_{D} ≤ 90 Millimeter), vorzugsweise 50 Millimeter breit und/oder 190 Millimeter bis 950 Millimeter (190 Millimeter ≤ h_{D} ≤ 950 Millimeter), vorzugsweise 450 Millimeter hoch. Diese Dimensionierung ist an die bevorzugte Dimensionierung der Leiterschleife bzw. der Antenne 22 angepasst.

Vorteilhafterweise kann das Lesegerät 10 für einen Betrieb mit einer Trägerfrequenz von 13,56MHz ausgelegt sein. Die Antenne kann nur eine Leiterschleife umfassen bzw. aus nur einer Leiterschleife gebildet sein.

Im in Längsrichtung 17 unteren Bereich des Innenteils 14 sind elektronische Komponenten, zum Beispiel eine Ansteuerungselektronik 23 mit optionalen LEDs zur Beleuchtung des Innenteils 14 und Anschlusskabel 24, angeordnet. Das oder die Anschlusskabel können insbesondere durch den Zugangskanal 27 geführt sein.

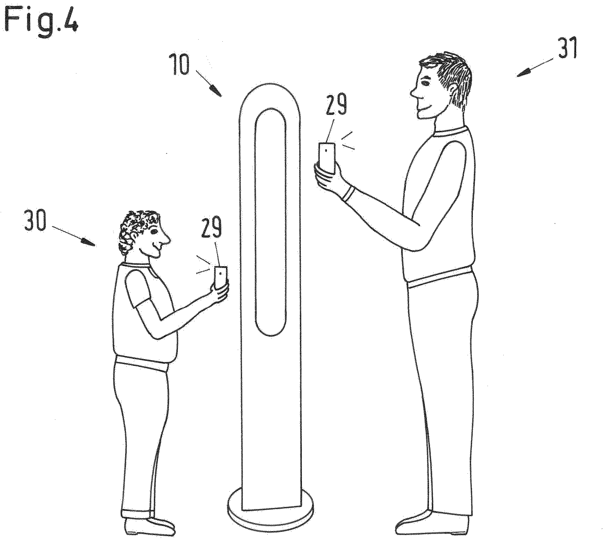

Die Figur 4 zeigt schematisch eine Anwendung des erfindungsgemäßen RFID-Lesegeräts 10. Das Lesegerät 10 ist beispielsweise an einem gesicherten Zugang zu einem Gebäude aufgestellt oder dort anderweitig angebracht. Nutzer 30 und 31 unterschiedlicher Körpergröße oder Rollstuhlfahrer müssen sich mit ID-Karten 29 mit integrierter Kamera zur Gesichtserkennung ausweisen, um Zugang zu erlangen. Durch die erfindungsgemäße Ausgestaltung des Lesegeräts 10 ist mit nur einem Lesegerät 10 eine Nutzung in sehr unterschiedlichen Höhen möglich, wobei dennoch eine Kamera einer ID-Karte 29 auf der Höhe des Gesichts des Nutzers 30 und 31 gehalten werden kann. In einer weiteren Variante kann auch ein Mobiltelefon mit einer biometrischen Authentisierung durch Nutzung einer integrierten Kamera und/oder eines Fingerabdrucksensors durch Nutzer 30 und 31 zur Identifizierung verwendet werden. Die erforderlichen Daten können zum Beispiel per NFC an das Lesegerät bzw. an ein Hintergrundsystem übermittelt werden.

Im Rahmen des erfindungsgemäßen Verfahren zur Herstellung eines zuvor beschriebenen RFID-Lesegeräts 10 wird mindestens eine Platte, also insbesondere die Frontplatte 13 und/oder das Innenteil 14 und/oder die Rückplatte 15 zur Fertigung des Gehäuses 11 mittels eines Lasers zugeschnitten. Bevorzugt werden als Platten Kunststoffplatten verwendet. Zur Bildung des Gehäuses 11 wird vorteilhafterweise das Innenteil 14 in Richtung der Mittelachse 16 zwischen der Frontplatte 13 und der Rückplatte 15 angeordnet. Die Platten (13, 14, 15) können lösbar fest miteinander verbunden werden, insbesondere verschraubt werden. Alternativ dazu oder zusätzlich können die Platten nicht lösbar fest miteinander verbunden werden, zum Beispiel aneinander geklebt oder gelötet oder geschweißt werden. In dem Innenteil 13 können die Antenne 22 und/oder mindestens eine elektronische Komponente 23 und 24 angeordnet werden, vorteilhafterweise bevor das Innenteil 14 mit der Frontplatte 13 und der Rückplatte 15 verbunden wird. Durch das Verfahren wird eine besonders einfache und kostengünstige Herstellung des erfindungsgemäßen RFID-Lesegeräts 10 ermöglicht.

### Bezugszeichenliste:

- 10: RFID-Lesegerät
- 11: Gehäuse
- 12: Ständerfuß
- 13: Frontplatte
- 14: Innenteil
- 15: Rückplatte
- 16: Mittelachse
- 17: Längsrichtung
- 18: Querrichtung
- 19: Grundplatte
- 20: Innenteil
- 21: Deckplatte
- 22: Antenne
- 23: Ansteuerungselektronik mit optionalen LEDs
- 24: Anschlusskabel
- 25: Durchgangsöffnung
- 26: Hohlraum
- 27: Zugangskanal
- 28: oberer Bereich
- 29: ID-Karte mit Kamerafunktion
- 30: kleine Person
- 31: große Person
- h: Höhe der Leiterschleife
- h_{D}: Höhe der Durchgangsöffnung
- b: Breite der Leiterschleife
- b_{D}: Breite der Durchgangsöffnung

## Patentansprüche

1. RFID-Lesegerät (10), welches ein Gehäuse (11) und mindestens eine in dem Gehäuse (11) angeordnete Antenne (22) umfasst, wobei die Antenne aus mindestens einer Leiterschleife gebildet ist, wobei die Leiterschleife eine Mittelachse (16) aufweist und in einer senkrecht zur Mittelachse (16) verlaufenden Längsrichtung (17) eine Höhe h und in einer senkrecht zur Mittelachse (16) und senkrecht zur Längsrichtung (17) verlaufenden Querrichtung (18) eine Breite b aufweist, wobei
- durch mindestens eine im Inneren der Leiterschleife angeordnete Durchgangsöffnung (25) eine offene Formgestaltung ausgebildet ist, wobei die Leiterschleife um die Durchgangsöffnung (25) herum verläuft,
**dadurch gekennzeichnet, dass**
die Höhe h größer als die Breite b ist, wobei die Breite b der Leiterschleife zwischen 40 Millimeter und 100 Millimeter beträgt (40 Millimeter ≤ b ≤ 100 Millimeter) und die Höhe h der Leiterschleife zwischen 200 Millimeter und 1000 Millimeter beträgt (200 Millimeter ≤ h ≤ 1000 Millimeter), und
das Lesegerät (10) einen Ständerfuß (12) und / oder Mittel zur Befestigung des Lesegeräts an einer Wand oder einem Bauteil umfasst.

2. RFID-Lesegerät (10) nach Anspruch 1, **dadurch gekennzeichnet, dass** das Gehäuse (11) eine Frontplatte (13), eine Rückplatte (15) und ein in Richtung der Mittelachse (16) zwischen der Frontplatte (13) und der Rückplatte (15) angeordnetes Innenteil (14) umfasst.

3. RFID-Lesegerät (10) nach Anspruch 2, **dadurch gekennzeichnet, dass** in dem Innenteil (14) die Antenne (22) und / oder mindestens eine elektronische Komponente (23, 24) angeordnet ist.

4. RFID-Lesegerät (10) nach einem der Ansprüche 1 bis 3, **dadurch gekennzeichnet, dass** das Gehäuse (10) ein transparent ausgestaltetes Innenteil (14) umfasst und das Lesegerät (10) eine Anzahl LEDs umfasst, die in dem Gehäuse (11) so angeordnet sind, dass sie bei ihrem Betrieb Licht durch das transparente Innenteil (14) abstrahlen.

5. RFID-Lesegerät (10) nach einem der Ansprüche 1 bis 4, **dadurch gekennzeichnet, dass** die Durchgangsöffnung (25) in Längsrichtung (17) eine Höhe h_{D} und in Querrichtung eine Breite b_{D} aufweist, wobei die Höhe h_{D} größer ist als die Breite b_{D} (h_{D} > b_{D}).

6. RFID-Lesegerät (10) nach einem der Ansprüche 1 bis 5, **dadurch gekennzeichnet, dass** die Antenne (22) nur eine Leiterschleife umfasst.

7. Verfahren zur Herstellung eines RFID-Lesegeräts (10) nach einem der Ansprüche 1 bis 6, **dadurch gekennzeichnet, dass** es den Schritt umfasst, dass mindestens eine Platte (13,14,15) zur Fertigung des Gehäuses (11) mittels eines Lasers zugeschnitten wird.

8. Verfahren nach Anspruch 7, **dadurch gekennzeichnet, dass** als Platte (13,14,15) eine Kunststoffplatte verwendet wird.

9. Verfahren nach Anspruch 7 oder 8, **dadurch gekennzeichnet, dass** eine Frontplatte (13), eine Rückplatte (15) und ein Innenteil (14) gefertigt werden und das Innenteil (14) zu Bildung des Gehäuses (11) in Richtung der Mittelachse (16) zwischen der Frontplatte (13) und der Rückplatte (15) angeordnet wird.

10. Verfahren nach Anspruch 9, **dadurch gekennzeichnet, dass** in dem Innenteil (14) die Antenne (22) und / oder mindestens eine elektronische Komponente (23, 24) angeordnet wird.

## Claims

1. An RFID reader (10) comprising a housing (11) and at least one antenna (22) arranged in the housing (11), wherein the antenna is formed from at least one conductor loop, wherein the conductor loop has a central axis (16) and a height (h) running in a longitudinal direction (17) perpendicular to the central axis (16) and a width b running in a transverse direction (18) perpendicular to the central axis (16) and perpendicular to the longitudinal direction (17), wherein
- an open structure is formed by at least one through-opening (25) arranged inside the conductor loop, wherein the conductor loop runs around the through-opening (25),
**characterized in that**
the height h is greater than the width b, wherein the width b of the conductor loop is between 40 millimetres and 100 millimetres (40 millimetres ≤ b ≤ 100 millimetres) and the height h of the conductor loop is between 200 millimetres and 1000 millimetres (200 millimetres ≤ h ≤ 1000 millimetres) and
the reader (10) comprises a stand base (12) and/or means for mounting the reader on a wall or a component.

2. The RFID reader (10) according to claim 1, **characterized in that** the housing (11) comprises a front plate (13), a rear plate (15) and an inner part (14) arranged between the front plate (13) and the rear plate (15) in the direction of the central axis (16).

3. The RFID reader (10) according to claim 2, **characterized in that** the antenna (22) and/or at least one electronic component (23, 24) is arranged in the inner part (14).

4. The RFID reader (10) according to any one of claims 1 to 3, **characterized in that** the housing (10) comprises a transparent inner part (14) and the reader (10) comprises a number of LEDs arranged in the housing (11) such that they emit light through the transparent inner part (14) when in operation.

5. The RFID reader (10) according to any one of claims 1 to 4, **characterized in that** the through-opening (25) has a height ho in the longitudinal direction (17) and a width bo in the transverse direction, wherein the height ho is greater than the width b_{D} (h_{D} > b_{D}).

6. The RFID reader (10) according to any one of claims 1 to 5, **characterized in that** the antenna (22) comprises only one conductor loop.

7. A method for manufacturing an RFID reader (10) according to any one of claims 1 to 6, **characterized in that** it comprises the step of cutting at least one plate (13, 14, 15) for the manufacture of the housing (11) by means of a laser.

8. The method according to claim 7, **characterized in that** a plastic plate is used as the plate (13, 14, 15).

9. The method according to claim 7 or 8, **characterized in that** a front plate (13), a rear plate (15) and an inner part (14) are manufactured and the inner part (14) is arranged between the front plate (13) and the rear plate (15) in the direction of the central axis (16) to form the housing (11).

10. The method according to claim 9, **characterized in that** the antenna (22) and/or at least one electronic component (23, 24) is arranged in the inner part (14).

## Revendications

1. Lecteur RFID (10) comportant un boîtier (11) et au moins une antenne (22) agencée dans le boîtier (11), dans lequel l'antenne est formée d'au moins une boucle conductrice, dans lequel la boucle conductrice présente un axe central (16) et une hauteur h dans une direction longitudinale (17) perpendiculaire à l'axe central (16) et une largeur b dans une direction transversale (18) perpendiculaire à l'axe central (16) et perpendiculaire à la direction longitudinale (17), dans lequel
- une forme ouverte est formée par au moins une ouverture traversante (25) disposée à l'intérieur de la boucle conductrice, dans lequel la boucle conductrice s'étend autour de l'ouverture traversante (25),
**caractérisé en ce que**
la hauteur h est supérieure à la largeur b, dans lequel la largeur b de la boucle conductrice est comprise entre 40 millimètres et 100 millimètres (40 millimètres ≤ b ≤ 100 millimètres) et la hauteur h de la boucle conductrice est comprise entre 200 millimètres et 1 000 millimètres (200 millimètres ≤ h ≤ 1 000 millimètres), et
le lecteur (10) comprend un socle (12) et/ou des moyens de fixation du lecteur à un mur ou un composant.

2. Lecteur RFID (10) selon la revendication 1, **caractérisé en ce que** le boîtier (11) comprend un panneau avant (13), un panneau arrière (15) et une partie intérieure (14) disposée dans la direction de l'axe central (16) entre le panneau avant (13) et le panneau arrière (15).

3. Lecteur RFID (10) selon la revendication 2, **caractérisé en ce que** dans la partie intérieure (14) l'antenne (22) et/ou au moins un composant électronique (23, 24) est disposé.

4. Lecteur RFID (10) selon une des revendications 1 à 3, **caractérisé en ce que** le boîtier (10) comprend une partie intérieure transparente (14) et que le lecteur (10) comprend un certain nombre de LEDs qui sont disposées dans le boîtier (11) de telle manière qu'elles rayonnent de la lumière à travers la partie intérieure transparente (14).

5. Lecteur RFID (10) selon une des revendications 1 à 4, caractérisé en que l'ouverture traversante (25) présente une hauteur h_{D} et in dans la direction transversale une largeur b_{D}, dans lequel la hauteur h_{D} est supérieure à la largeur b_{D} (h_{D} > b_{D}).

6. Lecteur RFID (10) selon une des revendications 1 à 5, caractérisé en que l'antenne (22) ne comprend qu'une seule boucle conductrice.

7. Procédé de fabrication d'un lecteur RFID (10) selon une des revendications 1 à 6, **caractérisé en ce qu'**il comprend l'étape de découpe d'au moins un panneau (13, 14, 15) pour fabriquer le boîtier (11) au moyen d'un laser.

8. Procédé selon la revendication 7, **caractérisé en ce qu'**un panneau en plastique est utilisée comme panneau (13, 14, 15).

9. Procédé selon la revendication 7 ou 8, **caractérisé en ce qu'**un panneau avant (13), une panneau arrière (15) et une partie intérieure (14) sont fabriquées et la partie intérieure (14) est disposée pour former le boîtier (11) dans la direction de l'axe central (16) entre le panneau avant (13) et le panneau arrière (15).

10. Procédé selon la revendication 9, **caractérisé en ce que** l'antenne (22) et/ou au moins un composant électronique (23, 24) est disposé dans la partie intérieure (14).
